(19) Europäisches Patentamt
European Patent Office
Office européen des brevets

(11) Veröffentlichungsnummer: **0 572 877 A1**

(12) **EUROPÄISCHE PATENTANMELDUNG**

(21) Anmeldenummer: **93108263.0**

(51) Int. Cl.5: **C04B 24/22**

(22) Anmeldetag: **21.05.93**

(30) Priorität: **02.06.92 DE 4218183**

(43) Veröffentlichungstag der Anmeldung:
**08.12.93 Patentblatt 93/49**

(84) Benannte Vertragsstaaten:
**AT BE CH DE ES FR GB IT LI NL**

(71) Anmelder: **BAYER AG**

**D-51368 Leverkusen(DE)**

(72) Erfinder: **Herzig, Joachim, Dr.**
**Am Weiher 14**
**W-5653 Leichlingen(DE)**
Erfinder: **Bredtmann, Kurt**
**Käthe-Kollwitz-Strasse 10**
**W-5090 Leverkusen(DE)**
Erfinder: **Knickel, Birger, Dr.**
**Wiesenstrasse 11**
**W-5068 Odenthal 2(DE)**
Erfinder: **Dörzbach-Lange, Cornelia, Dr.**
**Ammerweg 31**
**W-5067 Kürten-Bechen(DE)**

(54) **Verbesserte mineralische Baustoffe mit Zusatzmitteln.**

(57) Die Erfindung betrifft mineralische Baustoffe, die Bindemittel, gegebenenfalls Zuschlagstoffe und mindestens ein Zusatzmittel enthalten, wobei als Zusatzmittel Verbindungen eingesetzt werden, die Kondensationsprodukte von substituierten oder unsubstituierten Diphenylsulfonen, Formaldehyd und Verbindungen aus der Gruppe bestehend aus einkernigen oder mehrkernigen, substituierten oder unsubstituierten aromatischen Verbindungen, Säureamiden, Harnstoff, Harnstoffderivaten, substituierten oder unsubstituierten aromatischen Äthern und Iminen sind.

EP 0 572 877 A1

Die Erfindung betrifft mineralische Baustoffe, die Bindemittel, wie z.B. Zement oder Anhydrit, gegebenenfalls Zuschlagstoffe, wie z.B. Sand, und weitere Zusatzmittel enthalten.

Bei der Herstellung von Bauteilen, wie Estrichen, Wandplatten, Mauern, Decken usw. werden im allgemeinen anorganische Bindemittel, wie Anhydrit (natürlicher und künstlicher), Gips, Zement, teilweise ungemagert, in der Regel jedoch in Verbindung mit Zuschlagstoffen wie Sand, Kies, Perlit, Bims, geschäumte Kunststoffperlen, sowie mit Wasser - evtl. unter Verwendung von Zusätzen wie Luftporenbildnern oder Verflüssigern - angemischt und so verarbeitet. Hierbei muß man, um gute Eigenschaften der mit diesem Mörtel hergestellten Bauteile zu erhalten, darauf achten, daß mit einem geringen Wasser-Bindemittel-Faktor (WBF) gearbeitet wird, d.h. mit möglichst wenig Wasser bezogen auf das eingesetzte Bindemittel. Dadurch wird der Mörtel jedoch häufig zähflüssig. Bei weiterer Herabsetzung des Wassergehalts verliert er seine Plastizität und damit auch seine gute Verdichtbarkeit. Um dann aus einem solchen Mörtel hochwertige Bauteile herstellen zu können, ist ein intensives, mechanisches Verdichten durch Rütteln und/oder Pressen erforderlich. Da für viele Zwecke auch dies nicht ausreichend ist, müssen oft erhöhte Bindemittelmengen eingesetzt werden, um die gewünschten Eigenschaften wie hohe Festigkeiten, frühe Begehbarkeit oder frühe Entschalbarkeit, Dichtigkeit usw. zu erreichen.

Alle oben genannten Maßnahmen sind mit erhöhtem Aufwand und damit auch mit erhöhten Kosten verbunden. Oft wird deshalb auf diese Maßnahmen verzichtet und durch Erhöhung des Wasser-Bindemittel-Faktors eine leichtere Verarbeitbarkeit des Mörtels erzwungen. Qualitative Mängel oder Schäden an den so hergestellten Bauteilen sind oft die Folge.

Es wurde deshalb versucht, durch chemische Zusätze die Verarbeitungsfähigkeit von Mörteln zu verbessern.

Mittels chemischer plastifizierend oder verflüssigend wirkender Zusätze, die schon bei geringen Mengen die Bindemittelteilchen dispergieren, kann man eine beträchtlich verbesserte Verarbeitbarkeit der Baustoffmischung erreichen, ohne daß das Wasser-Bindemittel-Verhältnis geändert wird, beziehungsweise kann man mit weniger Wasser eine unveränderte Verarbeitbarkeit erreichen. In beiden Fällen erhält man im Durchschnitt eine geringere Porosität bei erhöhter Festigkeit.

Ferner wirken die plastifizierenden oder verflüssigenden Zusätze infolge ihrer Oberflächenaktivität auch dahingehend, daß sie die im Bindemittel stets anwesenden Agglomerate von feinteiligen Partikeln dispergieren. Dies führt zu einer besseren und homogeneren Verteilung des Bindemittels der Baustoffmischung und hierdurch zu einer besseren Wirkung des Bindemittels und damit zu einer höheren Festigkeit.

Die Unterscheidung zwischen plastifizierenden und verflüssigenden Substanzen ist nicht scharf. Mittels plastifizierender Zusätze ist es im allgemeinen möglich, eine Reduzierung der Wassermenge von etwa 15 % zu erreichen. Mit Verflüssigern hingegen wird oft eine Reduzierung der Wassermenge bis zu 30 % und eine Erhöhung der Festigkeit von 40 bis 50 % erreicht.

So ist bekannt, Verflüssiger für anorganische Bindemittel, wie Zement, Gips oder Anhydrit, einzusetzen, bei denen es sich fast durchweg um oberflächenaktive Stoffe, wie z.B. Melaminsulfonate, Alkyl-Arylsulfonate, Äthylenoxid-Additionsprodukte, Alkylphenol-Polyglykoläther, Ligninsulfonate und andere, sowie deren Kombinationen, handelt. Diese Produkte werden meist in Mengen von 0,01 bis 0,5 % zum Bindemittel eingesetzt. Dabei beträgt die Wassereinsparung beziehungsweise Erhöhung der Fließfähigkeit bei optimaler Dosierung kaum mehr als 10 bis 20 %. Größere Zusatzmengen ergeben keine wesentliche Steigerung des Verflüssigungseffektes, jedoch fast durchweg eine erhebliche negative Beeinflussung der Eigenschaften des Mörtels, vor allem eine Minderung der Abbindegeschwindigkeit, Erhöhung des Luftporengehaltes und Senkung der Festigkeiten.

In den deutschen Offenlegungsschriften 1 671 017 und 3 609 802 wird der Zusatz modifizierter Aminotriazin-Harze zu anorganischen Bindemitteln vorgeschlagen. Diese Zusätze verleihen dem Baustoff gute Haft-, Zug- und Druckfestigkeiten und Oberflächengüte. Diese Produkte bringen jedoch den Nachteil mit sich, daß sich bei niedriger Dosierung des Zusatzes schlecht zu verarbeitende klebende Mischungen mit zu kurzer Verarbeitungszeit ergeben beziehungsweise bei höherer Dosierung, abgesehen von Wirtschaftlichkeitsaspekten, Mischungen ergeben, bei denen sich Bindemittel und Zuschlagstoff separieren, und es zur Ausbildung von Schlämmschichten auf der Oberfläche kommt.

Es ist weiterhin bekannt, als Plastifikatoren und/oder Verflüssiger für Baustoffmischungen Ligninsulfonate (DOS 2 713 898, DOS 3 204 326) und Lignin-Formaldehydkondensate (US 3 184 493, DOS 2 803 923, EP 3 362) sowie Naphthalinsulfonate (DAS 1 238 831, DOS 2 007 603, DOS 2 809 685) einzusetzen.

Die Wirksamkeit von Verflüssigern auf Basis von Ligninsulfonaten ist geringer als die von Melaminharz-Kondensaten. Bei höheren Dosierungen zeigt sich zwar eine gute verflüssigende Wirkung, die Mörtelzusammensetzung "blutet" jedoch aus, und die Abbindezeiten werden zu hoch. Mischungen verschiedener Ligninsulfonate mit anderen chemischen Substanzen, wie kondensierten Aromaten, Heterozyklen und Aminoverbindungen mildern zwar die unerwünschten Effekte, können sie jedoch nicht beseitigen.

Nichtionische Zusatzstoffe vom Typ der Polyäther werden in DOS 2 050 084 beschrieben. DOS 1 265 022 empfiehlt die Verwendung nichtionogener Netzmittel mit organischen Aminobasen sowie Hydroxylgruppen enthaltenden organischen Säuren.

DOS 2 322 707 betrifft Mörtel, die anorganische Bindemittel, gegebenenfalls Zuschlagstoffe, Zusatzstoffe und/oder Zusatzmittel enthalten, wobei als Zusatzmittel Formaldehyd-Kondensationsprodukte mit sulfonierten aromatischen Äthern und/oder Iminen und/oder Sulfonen eingesetzt werden.

Derartige Zusatzmittel haben eine geringe plastifizierende/verflüssigende Wirkung und müssen deshalb zur Erzielung der gewünschten Effekte in relativ hoher Dosierung eingesetzt werden, was ihre Verwendung unwirtschaftlich macht. Hinzu kommt, daß die Mörtelmischungen bei den erforderlichen hohen Dosierungen stark zum "Ausbluten" oder bei nicht fließfähigen Mischungen zum Kleben neigen.

Aufgabe war es daher, Baustoffe auf der Grundlage mineralischer, anorganischer Bindemittel zur Verfügung zu stellen, bei denen die erforderliche Menge Wasser zur Erreichung der Verarbeitungskonsistenz gering ist, die Festigkeit des abgebundenen Baustoffs hoch ist und gleichzeitig die Verarbeitbarkeit des nassen Baustoffes gut ist, ohne daß die Abbindezeiten stark verzögert sind.

Diese Aufgabe konnte mit den erfindungsgemäßen mineralischen Baustoffen gelöst werden.

Gegenstand der Erfindung sind mineralische Baustoffe, die Bindemittel, gegebenenfalls Zuschlagstoffe und mindestens ein Zusatzmittel enthalten, dadurch gekennzeichnet, daß als Zusatzmittel Verbindungen eingesetzt werden, die Kondensationsprodukte von substituierten oder unsubstituierten Diphenylsulfonen, Formaldehyd und Verbindungen aus der Gruppe bestehend aus einkernigen oder mehrkernigen, substituierten oder unsubstituierten aromatischen Verbindungen, Säureamiden, Harnstoff, Harnstoffderivaten, substituierten oder unsubstituierten aromatischen Äthern und Iminen sind.

Bevorzugt sind mineralische Baustoffe, die als Zusatzmittel Kondensationsprodukte aus Diphenylsulfonen der Formel I

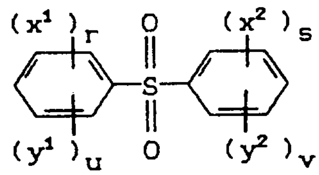

(I)

mit

$X^1$ und $X^2$ = H, OH, substituiertes oder unsubstituiertes $C_1$-$C_6$-Alkyl, $C_1$-$C_6$-Alkoxy oder Halogen, wobei $X^1$ und $X^2$ gleich oder verschieden sein können,

$Y^1$ und $Y^2$ = H, $(CH_2)n$ $SO_3Me$ oder $SO_3Me$ [mit n = 1-5 und Me = Alkalimetall, substituiertes oder unsubstituiertes Ammonium], wobei $Y^1$ und $Y^2$ gleich oder verschieden sein können,

r und s unabhängig voneinander = 0 bis 2

und

u und v unabhängig voneinander = 0 oder 1

und Verbindungen der Formeln II bis V

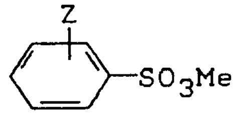

II

Me = Alkalimetall, substituiertes oder unsubstituiertes Ammonium

Z = H, OH, $C_1$-$C_4$-Alkyl

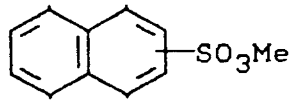

III

Me = Alkalimetall, substituiertes oder unsubstituiertes Ammonium

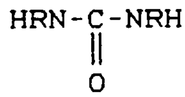

IV

R = H, $C_1$-$C_4$-Alkyl

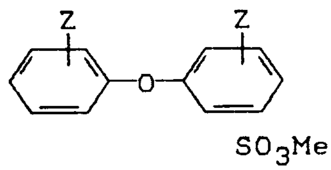

V

Me = Alkalimetall, substituiertes oder unsubstituiertes Ammonium
Z = H, OH, $C_1$-$C_4$-Alkyl
und Formaldehyd enthalten.

Besonders bevorzugt sind mineralische Baustoffe, die als Zusatz Kondensationsprodukte aus Diphenylsulfonen und Verbindungen aus der Gruppe bestehend aus einkernigen oder mehrkernigen, substituierten oder unsubstituierten aromatischen Verbindungen, Säureamiden, Harnstoff, Harnstoffderivaten, substituierten oder unsubstituierten aromatischen Äthern und Iminen im Molverhältnis 1:5 bis 5:1 mit Formaldehyd im Molverhältnis 1:0,8 bis 1:2,0 bezogen auf die im Überschuß vorhandene Komponente enthalten.

Vorzugsweise werden Kondensationsprodukte aus Diphenylsulfonen der Formel I
mit

| | |
|---|---|
| $X^1$ und $X^2$ = | OH |
| r und s = | 1 |
| $Y^1$ und $Y^2$ = | $SO_3Me$ oder $(CH_2)_nSO_3Me$ [mit Me = Alkalimetall und n = 1] |
| u und v = | 0 oder 1 |

und Verbindungen der Formeln VI bis IX

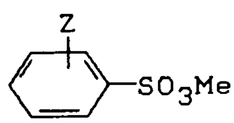

VI

Me = Alkalimetall
Z = H, OH, $C_1$-$C_4$-Alkyl

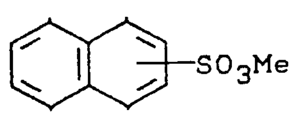

VII

Me = Alkalimetall

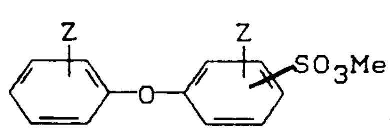

VIII

Me = Alkalimetall
Z = H, OH, $C_1$-$C_4$-Alkyl

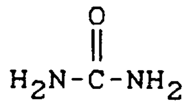

IX

und Formaldehyd eingesetzt.

Die mineralischen Baustoffe werden zur Herstellung von Bauteilen, wie Estrichen, Wandplatten, Mauern, Decken usw. verwendet.

Die Zusatzmittel können pulverförmig oder in Lösung dem mineralischen Baustoff zugesetzt werden.

Als Maßstab für die Wirksamkeit von Zusatzmitteln wird bei erdfeuchten, nicht fließfähigen Baustoffen die Handhabbarkeit bei der Anwendung, wie z.B. mechanische Beweglichkeit, Klebrigkeit und Separierungsneigung der Bestandteile verstanden.

Eine Messgröße für die Verarbeitbarkeit erdfeuchter, nicht fließfähiger Baustoffe ist ferner der Luftporengehalt nach DIN 18555/P2. Je höher der Luftporengehalt umso leichter ist im allgemeinen die Verarbeitbarkeit und um so geringer ist die Klebrigkeit des Baustoffes. Die Druckfestigkeit fällt jedoch im allgemeinen mit steigendem Luftporengehalt ab. Der Mörtel sollte deshalb auch bei erhöhtem Luftporengehalt noch ausreichende Festigkeit aufweisen.

Ferner darf durch die Verwendung eines Zusatzmittels keine Sedimentation oder ein "Ausbluten" des Baustoffes in der Anfangsphase hervorgerufen werden und während oder nach dem Abbinden kein unzulässiger Schwund oder Quellverhalten gemäß DIN 52450 verursacht werden.

Bei fließfähigen Baustoffen soll der Baustoff möglichst selbstnivellierend sein und und fließen, ohne daß ein "Ausbluten" in der Anfangsphase auftritt. Fließfähige Baustoffe müssen ferner eine genügend lange Verarbeitungszeit aufweisen, ohne daß die Abbindezeit wesentlich verzögert wird. Ansonsten gelten die gleichen Anforderungen wie für nicht fließfähige Baustoffe wie oben beschrieben.

Die erfindungsgemäßen Baustoffe erfüllen diese o.g. Erfordernisse in höchstem Maße`

Den erfindungsgemäßen Baustoffen können außer den als Zusatzmittel beanspruchten Kondensationsprodukten auch noch weitere an sich bekannte Zusatzmittel zugefügt werden.

Die als Zusatzstoffe beanspruchten Kondensationsprodukte sind Verbindungen, die aus der Literatur allgemein bekannt sind und deren Herstellung ebenfalls beschrieben ist (siehe Ullmanns Encyclopädie der technischen Chemie Bd. 16, S. 109; DE-OS 19 60 616, EP-A-242 495, DE-A-29 05 083).

Die Herstellung der Baustoffe und die Ermittlung der Daten erfolgte gemäß Norm DIN 4208 Anhydritbinder Ausgabe März 1984 für Anhydrit, gemäß DIN EN 196 Prüfverfahren für Zement und gemäß DIN 1168 für $\beta$-Halbhydrat.

Als Maßstab für die plastifizierende/verflüssigende Wirkung von Zusatzmitteln wird das Ausbreitmaß gemäß DIN 4208/EN 196 herangezogen. Das Ausbreitmaß ist der Durchmesser eines Kreises einer Mischung, der sich ergibt, wenn ein komischer Setztrichter von 8 cm Höhe, 10 cm unteren und 8 cm oberen Durchmesser gefüllt mit der zu prüfenden Mischung auf eine Glasplatte ausgesetzt wird und sodann vorsichtig senkrecht abgezogen wird. Die Mischung breitet sich sodann kreisförmig aus. Das Verhältnis der Durchmesser der Kreise der Baustoffe ohne und mit Zusatzmittel gibt Auskunft über die verflüssigende Wirkung des Zusatzmittels. Bei erdfeuchten nicht verfließenden Baustoffen wird vor Ermittlung des Durchmessers die Glasplatte gemäß Norm DIN 4208/EN 196 15mal geschockt.

In abgewandelter Form kann die plastifizierende oder verflüssigende Wirkung des Zusatzmittels auch ermittelt werden, indem bei konstantem Ausbreitmaß die erforderliche Wassermenge mit und ohne Zusatzmittel ermittelt wird.

Zur Beurteilung der selbstnivellierenden Eigenschaften von Baustoffen wird zusätzlich die Spurzeit herangezogen. Unter Spurzeit ist die Zeit zu verstehen, bis zu der eine auf der Oberfläche der Baustoffe erzeugte Spur in sich selbst verfließt. Die Spur kann z.B. durch Bewegung eines Nagels oder ähnlichen Gegenständen an der Oberfläche der Mischung erzeugt werden. Die Beurteilung erfolgt visuell.

Die Erfindung soll anhand der nachfolgenden Beispiele näher erläutert werden.

Beispiel 1 (erfindungsgemäß)

1 Mol Dihydroxydiphenylsulfon roh wird mit 1,2 Mol Natriumbisulfit und 2,3 Mol Formaldehyd sulfomethyliert, das erhaltene Produkt mit Schwefelsäure und Schwefeldioxid auf pH 5 gestellt und mit 1,5 Mol Harnstoff und weiteren 0,65 Mol Formaldehyd nachkondensiert. Nach Zusatz von Phthalsäure-Mononatriumsalz (ca. 20 Gew.-% bezogen auf den Trockengehalt des Kondensates) wird ein pH-Wert von 7-8 eingestellt und sprühgetrocknet.

Dieses Kondensationsprodukt wird verschiedenen Baustoffen zugesetzt, deren Eigenschaften danach gemessen werden (siehe Tabellen).

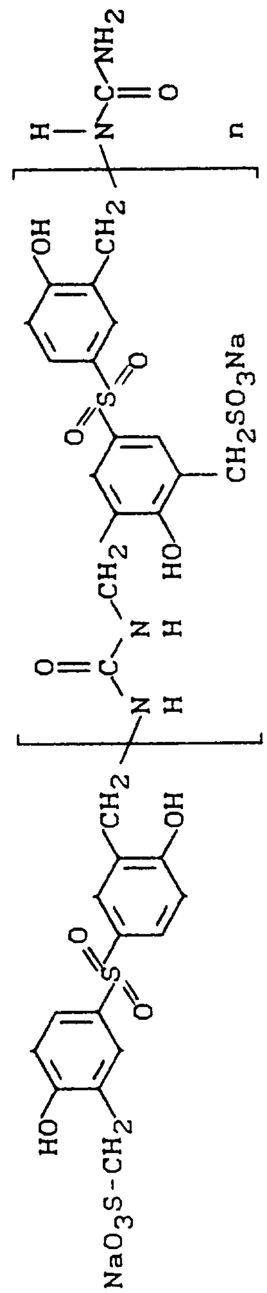

n = 1-2

Zusatzmittel A

Beispiel 2 (erfindungsgemäß)

1 Mol Ditolyletherisomerengemisch wird mit 2 Mol Schwefelsäure sulfoniert und das erhaltene Gemisch von Ditolylethersulfonsäuren mit 1 Mol 4,4'-Dihydroxydiphenylsulfon in wäßriger Lösung mit 0,93 Mol Formaldehyd kondensiert, mit Natronlauge auf pH ca. 7-9 neutralisiert und sprühgetrocknet bzw. als Lösung eingesetzt.

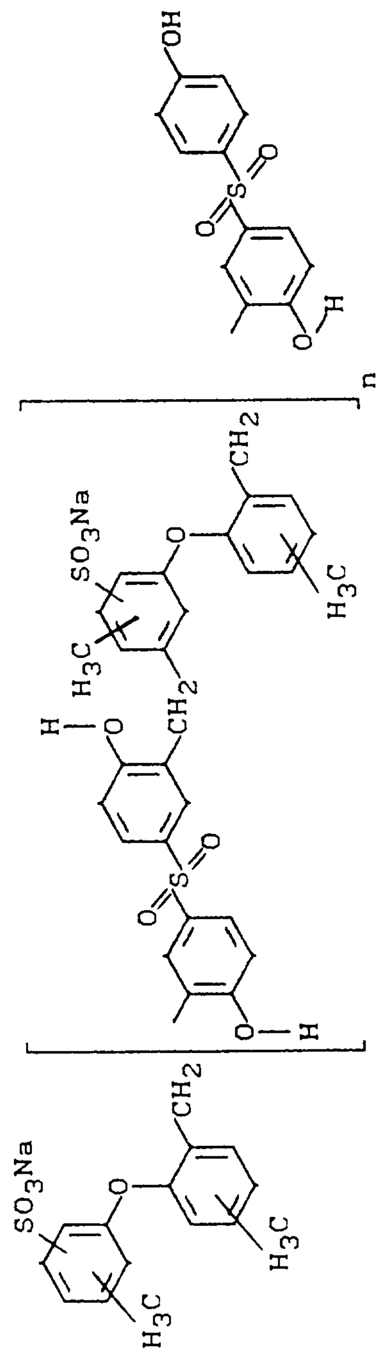

n = 2-3

Zusatzmittel B

Beispiel 3 (erfindungsgemäß)

1 Mol Naphthalin wird mit 1,36 Mol Schwefelsäure 100%ig sulfoniert und in wäßriger Lösung zusammen mit 0,63 Mol 4,4'-Dihydroxidiphenylsulfon mit 0,81 Mol Formaldehyd kondensiert. Das saure Kondensationsgemisch wird mit Natronlauge und Na-Phthalatlösung neutralisiert auf pH ca. 7-9 und sprühgetrocknet oder als Lösung eingesetzt.

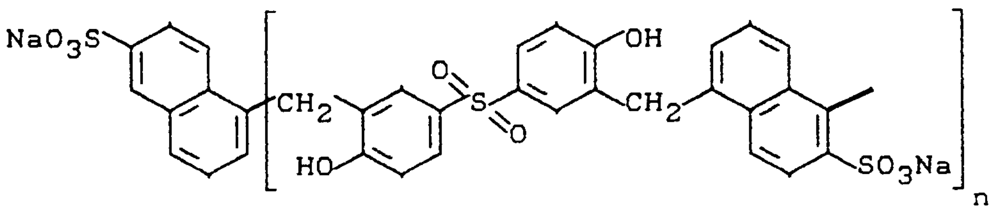

n = 2-3

Zusatzmittel C

Beispiel 4 (erfindungsgemäß)

1 Mol Phenolsulfonsäure und 3 Mol 4,4'-Dihydroxydiphenylsulfon roh werden in wäßriger Lösung bei pH ca. 8 mit 2,4 Mol Formaldehyd kondensiert. Das saure Kondensationsgemisch wird mit Natronlauge und Na-Phthalatlösung neutralisiert und auf pH 7-9 eingestellt und sprühgetrocknet oder als wäßrige Lösung eingesetzt.

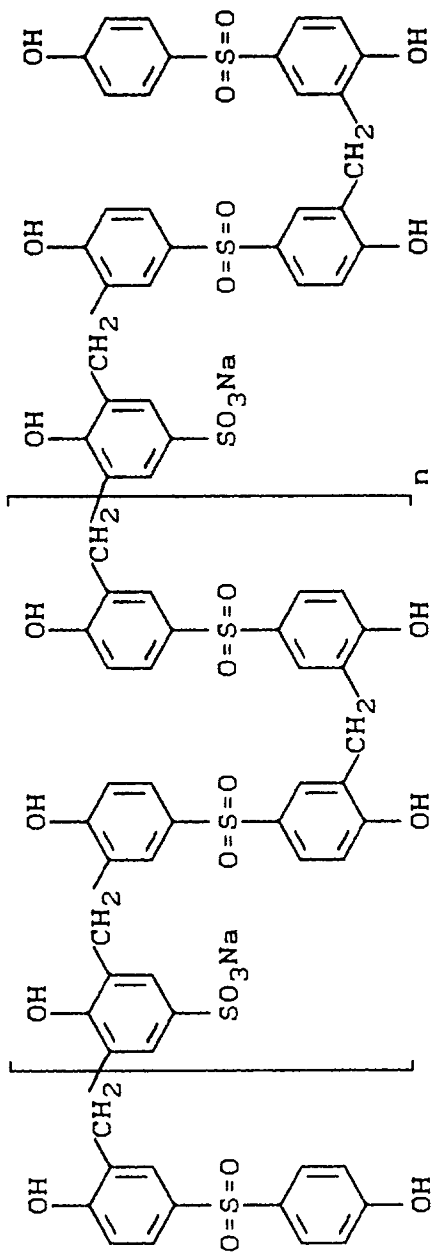

Zusatzmittel D

Beispiel 5 (Vergleich)

2,4,6-Triamino-1,3,5-triazin (Melamin) wird bei pH 9,0 mit Formaldehyd und Natriumhydrogensulfit umgesetzt. Die so erhaltene N-Methylolverbindung wird anschließend unmittelbar nach Zugabe einer kleinen Menge Formamid bei pH 6,0 kondensiert. Der pH-Wert der wäßrigen Lösung wird auf 9,5 eingestellt und das erhaltene Produkt entweder sprühgetrocknet oder in wäßriger Lösung eingesetzt.

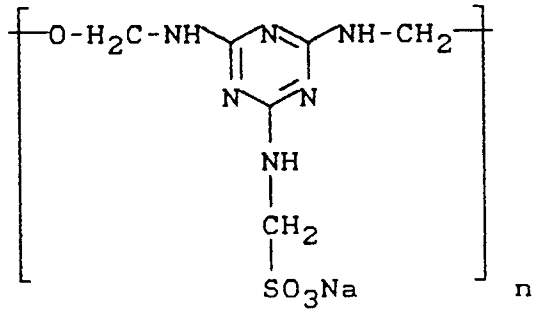

Zusatzmittel E

Beispiel 6 (Vergleich)

1 Mol Naphthalin wird mit 1,36 Mol Schwefelsäure ca. 3 Stunden bei ca. 145 °C sulfoniert, das erhaltene Sulfonierungsgemisch ca. 3 Stunden mit 0,64 Mol Formaldehyd bei 115 bis 117 °C kondensiert, abgekühlt auf ca. 80 °C, mit Natronlauge auf pH 6 bis 7 gestellt und das Reaktionsprodukt sprühgetrocknet oder als wäßrige Lösung eingesetzt.

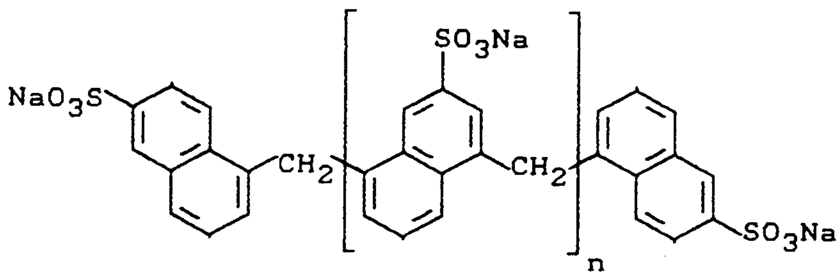

n = 1-3

Zusatzmittel F

Tabelle 1

| Baustoff | Wassermenge [ml] | Ausbreitmaß [mm] | Spurzeit [min] | Luftporengehalt [%] | Sedimentationsneigung | Abbindung nach 24 h 60% RH, 20° C |
|---|---|---|---|---|---|---|
| 1 kg Anhydrit[1)] 1 kg Sand (0-2 mm) | 520 | 235 | 3 | - | stark | ja |
| + 2,5 g Zusatzmittel A | 450 | 240 | 10 | - | mäßig | ja |
| + 2,5 g Zusatzmittel B | 450 | 230 | 12 | - | mäßig | ja |
| + 2,5 g Zusatzmittel C | 450 | 240 | 15 | - | schwach | ja |
| + 2,5 g Zusatzmittel D | 350 | 235 | 40 | - | schwach | ja |

1) Synthetischer Anhydritbinder AB20 gemäß DIN 4208 mit 1,0 Gew.-% $K_2SO_4$ als Anreger und einem mittleren Eisengehalt von 0,5 Gew.-% Fe

RH = relative Luftfeuchtigkeit

Tabelle 2

| Baustoff | Wassermenge [ml] | Ausbreitmaß [mm] | Spurzeit [min] | Luftporengehalt [%] | Sedimentationsneigung | Abbindung nach 24 h 60% RH, 20° C |
|---|---|---|---|---|---|---|
| 1 kg Anhydrit[1)] | 250 | 100 | 0 | - | - | ja |
| + 7 g Zusatzmittel A | 250 | 155 | 10 | - | - | nein |
| + 7 g Zusatzmittel B | 250 | 145 | 15 | - | - | ja |
| + 7 g Zusatzmittel C | 250 | 130 | 10 | - | - | ja |
| + 7 g Zusatzmittel D | 250 | 350 | 60 | - | - | nein |

1) Synthetischer Anhydritbinder AB20 gemäß DIN 4208 mit 1,0 Gew.-% $K_2SO_4$ als Anreger und einem mittleren Eisengehalt von 0,5 Gew.-% Fe

RH = relative Luftfeuchtigkeit

Tabelle 3

| Baustoff | Wassermenge [ml] | Ausbreitmaß [mm] | Spurzeit [min] | Luftporengehalt [%] | Sedimentationsneigung | Abbindung nach 24 h 60% RH, 20° C |
|---|---|---|---|---|---|---|
| 1 kg Anhydrit 1) | 250 | 100 | 0 | - | - | ja |
| + 10 g Zusatzmittel A | 250 | 205 | 12 | - | - | nein |
| + 10 g Zusatzmittel B | 250 | 210 | 20 | - | - | ja |
| + 10 g Zusatzmittel C | 250 | 190 | 15 | - | - | ja |
| + 5 g Zusatzmittel D | 250 | 315 | 30 | - | - | nein |

1) Synthetischer Anhydritbinder AB20 gemäß DIN 4208 mit 1,0 Gew.-% $K_2SO_4$ als Anreger und einem mittleren Eisengehalt von 0,5 Gew.-% Fe

RH = relative Luftfeuchtigkeit

Tabelle 4

| Baustoff | Wassermenge [ml] | Ausbreitmaß [mm] | Spurzeit [min] | Luftporengehalt [%] | Sedimentationsneigung | Abbindung nach 24 h 60% RH, 20° C |
|---|---|---|---|---|---|---|
| 1 kg Anhydrit[1)] 1 kg Sand (0-2 mm) | 470 | 190 | 0 | - | stark | ja |
| + 2,5 g Zusatzmittel A | 470 | 250 | 10 | - | mäßig | ja |
| + 2,5 g Zusatzmittel B | 470 | 240 | 12 | - | mäßig | ja |
| + 2,5 g Zusatzmittel C | 470 | 250 | 15 | - | schwach | ja |
| + 2,5 g Zusatzmittel D | 470 | 300 | 60 | - | schwach | ja |
| + 2,5 g Zusatzmittel E | 470 | 280 | 40 | - | stark | ja |
| + 2,5 g Zusatzmittel F | 470 | 210 | 5 | - | mäßig | ja |

1) Synthetischer Anhydritbinder AB20 gemäß DIN 4208 mit 1,0 Gew.-% $K_2SO_4$ als Anreger und einem mittleren Eisengehalt von 0,5 Gew.-% Fe

RH = relative Luftfeuchtigkeit

Tabelle 5

| Baustoff | Wassermenge [ml] | Ausbreitmaß [mm] | Verarbeitungseigenschaft | Luftporengehalt [%] | Sedimentationsneigung | Druckfestigkeit [N/mm²] nach 7 d | 28 d |
|---|---|---|---|---|---|---|---|
| 2 kg Anhydrit[1)] 7,5 kg Sand (0-8 mm) | 920 | 150 | klebt, setzt Wasser ab | 4,4 | stark | 20 | 20 |
| + 10 g A | 840 | 150 | klebt | 4,0 | mäßig | 25 | 26 |
| + 10 g B | 740 | 150 | gut | 13,6 | schwach | 16 | 22 |
| + 10 g C | 860 | 150 | gut | 6,9 | mäßig | 24 | 24 |
| + 10 g D | 780 | 150 | klebt etwas | 4,5 | schwach | 28 | 30 |
| + 10 g E | 830 | 150 | klebt, setzt Wasser ab | - | stark | 28 | 32 |

1) Synthetischer Anhydritbinder AB20 gemäß DIN 4208 mit 1,0 Gew.-% $K_2SO_4$ als Anreger und einem mittleren Eisengehalt von 0,5 Gew.-% Fe

RH = relative Luftfeuchtigkeit

Tabelle 6

| Baustoff | Wassermenge [ml] | Ausbreitmaß [mm] | Verarbeitungseigenschaft | Luftporengehalt [%] | Sedimentationsneigung | Druckfestigkeit [N/mm²] nach 7 d | 28 d |
|---|---|---|---|---|---|---|---|
| 2 kg Anhydrit[1)] 7,5 kg Sand (0-8 mm) | 900 | 150 | klebt stark | 4,3 | - | 19 | 23 |
| + 5,0 g C + 5,0 g E | 760 | 150 | gut | 6,5 | - | 22 | 27 |
| + 5,0 g D + 5,0 g E | 750 | 150 | gut | 6,0 | - | 19 | 24 |
| + 5,0 g B + 5,0 g E | 700 | 150 | gut | 7,6 | - | 22 | 25 |
| + 5,0 g A + 5,0 g E | 720 | 150 | gut | 6,0 | - | 20 | 23 |
| + 10 g E | 820 | 150 | klebt stark | 5,4 | - | 24 | 26 |
| + 10 g F | 730 | 150 | klebt | 7,3 | - | 22 | 22 |

1) Synthetischer Anhydritbinder AB20 gemäß DIN 4208 mit 1,0 Gew.-% $K_2SO_4$ als Anreger und einem mittleren Eisengehalt von 0,5 Gew.-% Fe

RH = relative Luftfeuchtigkeit

Tabelle 7

| Baustoff | Wassermenge [ml] | Ausbreitmaß [mm] | Verarbeitungszeit [min] | Luftporengehalt [%] | Sedimentationsneigung | Druckfestigkeit [N/mm²] nach 7 d | 28 d |
|---|---|---|---|---|---|---|---|
| 4 kg Anhydrit[1)] 4 kg Sand (0-2 mm) | 2370 | 245 | 3 | - | stark | | |
| + 6,4 g E + 1,6 g D | 1680 | 245 | 45 | - | mäßig | 29 | 42 |
| + 8 g E + 2,0 g D | 1620 | 240 | 50 | - | schwach | 29 | 42 |
| + 9,6 g E + 5,0 g D | 1520 | 240 | 60 | - | keine | 32 | 46 |
| +11,2 g E + 2,8 g D | 1440 | 240 | 60 | - | keine | 35 | 51 |
| +12,8 g E + 3,2 g D | 1400 | 240 | 65 | - | keine | 32 | 47 |
| +14,4 g E + 3,6 g D | 1320 | 235 | 70 | - | keine | 40 | 55 |
| +16,0 g E + 4,0 g D | 1250 | 240 | 80 | - | keine | 42 | 55 |
| +10,0 g E | 1500 | 240 | 45 | - | mäßig | 32 | 39 |

1) Synthetischer Anhydritbinder AB20 gemäß DIN 4208 mit 1,0 Gew.-% $K_2SO_4$ als Anreger und einem mittleren Eisengehalt von 0,5 Gew.-% Fe

RH = relative Luftfeuchtigkeit

Tabelle 8

| Baustoff | Wassermenge [ml] | Ausbreitmaß [mm] | Abbindezeit nach DIN 1168 Beginn [min] | Abbindezeit nach DIN 1168 Ende [min] | Luftporengehalt [%] | Sedimentationsneigung | Abbindung nach 24 Std. 60 % RH $20^0$ C |
|---|---|---|---|---|---|---|---|
| 1 kg Gips (β-Halbhydrat) | 600 | 230 | 5 | 20 | - | - | ja |
| + 5 g A | 600 | 290 | 22 | 50 | - | - | ja |
| + 5 g B | 600 | 290 | 6 | 30 | - | - | ja |
| + 5 g C | 600 | 290 | 17 | 45 | - | - | ja |
| + 5 g D | 600 | 310 | 7 | 20 | - | - | ja |
| + 2,5 g C<br>+ 2,5 g E | 600 | 330 | 10 | 31 | - | - | ja |
| + 2,5 g D<br>+ 2,5 g E | 600 | 370 | 17 | 32 | - | - | ja |
| + 5 g E | 600 | 300 | 7 | 25 | - | - | ja |
| + 5 g F | 600 | 280 | 6 | 20 | - | - | ja |

Tabelle 9

| Baustoff | Wassermenge [g] | Ausbreitmaß [mm] | Spurzeit [min] |
|---|---|---|---|
| 1 kg PZ35F[2)] 1 kg Sand (0-2mm) | 400 | 135 | 0 |
| + 5 g A | 400 | 255 | 4 |
| + 5 g B | 400 | 135 | 2 |
| + 5 g C | 400 | 165 | 3 |
| + 5 g D | 400 | 355 | 10 |
| + 5 g E | 400 | 285 | 0 |
| + 2,5 g E + 2,5 g D | 400 | 245 | 4 |
| + 1,25g D + 3,75g E | 400 | 355 | 12 |
| + 5 g F | 400 | 155 | 0 |
| 1 kg PZ 35F[2)] 2,7 kg Normsand[3)] | 550 | nicht bestimmbar | 0 |
| + 2,5 g E + 2,5 g C | 550 | 210 | 0 |
| + 1,25g D + 3,75g E | 550 | 235 | 10 |
| + 5 g E | 550 | 230 | 3 |

2) Portlandzement PZ 35F gemäß EN 196

3) DIN 1164, Teil 7, Nov. 78

Tabelle 10

| Baustoff | Wassermenge [ml] | Ausbreitmaß [mm] | Verarbeitungseigenschaft | Luftporengehalt [%] | Sedimentationsneigung | Druckfestigkeit [N/mm²] nach 7 d | 28 d |
|---|---|---|---|---|---|---|---|
| 2 kg PZ35F[2)] 10 kg Sand (0-8 mm) | 1100 | 150 | klebt | 4,9 | stark | 25 | 27 |
| + 10 g A | 1060 | 150 | klebt | 4,8 | keine | 29 | 32 |
| + 10 g B | 820 | 150 | klebt, schaumig | 19,5 | mäßig | 8 | 10 |
| + 10 g C | 1020 | 150 | gut | 7,4 | keine | 27 | 31 |
| + 10 g D | 1020 | 150 | gut | 5,2 | keine | 34 | 36 |
| + 10 g E | 1050 | 150 | klebt | 5,0 | mäßig | 29 | 31 |
| + 5 g E + 5 g C | 1050 | 150 | gut | 5,9 | keine | 29 | 30 |
| + 8 g E + 2 g D | 1080 | 150 | klebt etwas | 4,9 | keine | 27 | 30 |
| + 10 g F | 1050 | 150 | klebt, schaumig | 7,0 | mäßig | 21 | 22 |

1) Synthetischer Anhydritbinder AB20 gemäß DIN 4208 mit 1,0 Gew.-% $K_2SO_4$ als Anreger und einem mittleren Eisengehalt von 0,5 Gew.-% Fe

RH = relative Luftfeuchtigkeit

## Patentansprüche

1. Mineralische Baustoffe, die Bindemittel, gegebenenfalls Zuschlagstoffe und mindestens ein Zusatzmittel enthalten, dadurch gekennzeichnet, daß als Zusatzmittel Verbindungen eingesetzt werden, die Kondensationsprodukte von substituierten oder unsubstituierten Diphenylsulfonen, Formaldehyd und Verbindungen aus der Gruppe bestehend aus einkernigen oder mehrkernigen, substituierten oder unsubstituierten aromatischen Verbindungen, Säureamiden, Harnstoff, Harnstoffderivaten, substituierten oder unsubstituierten aromatischen Äthern und Iminen sind.

**2.** Mineralische Baustoffe nach Anspruch 1, daduch gekennzeichnet, daß Kondensationsprodukte aus Diphenylsulfonen der Formel I

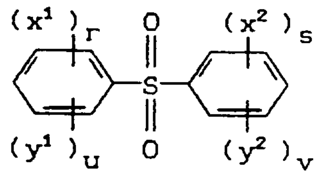

(I)

mit

| | |
|---|---|
| $X^1$ und $X^2$ = | H, OH, substituiertes oder unsubstituiertes $C_1$-$C_6$-Alkyl, $C_1$-$C_6$-Alkoxy oder Halogen, wobei $X^1$ und $X^2$ gleich oder verschieden sein können, |
| $Y^1$ und $Y^2$ = | H, $(CH_2)_n$ $SO_3Me$ oder $SO_3Me$ [mit n = 1-5 und Me = Alkalimetall, substituiertes oder unsubstituiertes Ammonium], wobei $Y^1$ und $Y^2$ gleich oder verschieden sein können, |
| r und s unabhängig voneinander = | 0 bis 2 und |
| u und v unabhängig voneinander = | 0 oder 1 |

und Verbindungen der Formeln II bis V

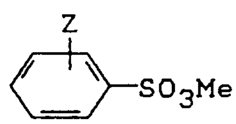

II

Me = Alkalimetall, substituiertes oder unsubstituiertes Ammonium
Z = H, OH, $C_1$-$C_4$-Alkyl

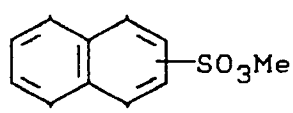

III

Me = Alkalimetall, substituiertes oder unsubstituiertes Ammonium

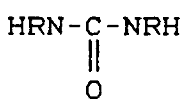

IV

R = H, $C_1$-$C_4$-Alkyl

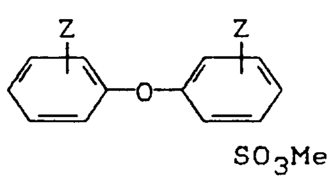

V

Me = Alkalimetall, substituiertes oder unsubstituiertes Ammonium
Z = H, OH, $C_1$-$C_4$-Alkyl
und Formaldehyd eingesetzt werden.

**3.** Mineralische Baustoffe nach Anspruch 1 oder 2, dadurch gekennzeichnet, daß Kondensationsprodukte aus Diphenylsulfonen der Formel I
mit

| | |
|---|---|
| $X^1$ und $X^2$ = | OH |
| r und s = | 1 |
| $Y^1$ und $Y^2$ = | $SO_3Me$ oder $(CH_2)_nSO_3Me$ [mit Me = Alkalimetall und n = 1] |
| u und v = | 0 oder 1 |

und Verbindungen der Formeln VI bis IX

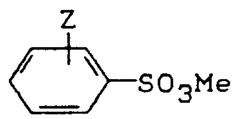

VI

Me = Alkalimetall
Z = H, OH, $C_1$-$C_4$-Alkyl

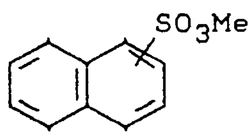

VII

Me = Alkalimetall

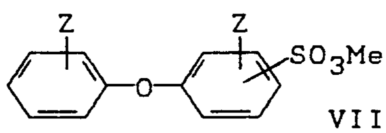

VIII

Me = Alkalimetall
Z = H, OH, $C_1$-$C_4$-Alkyl

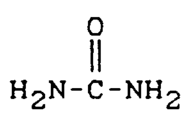

IX

und Formaldehyd eingesetzt werden.

**4.** Mineralische Baustoffe nach Anspruch 1 bis 3, dadurch gekennzeichnet, daß Kondensationsprodukte aus Diphenylsulfonen und Verbindungen aus der Gruppe bestehend aus ein- oder mehrkernigen, substituierten oder unsubstituierten aromatischen Verbindungen, Säureamiden, Harnstoff, Harnstoffderivaten, substituierten oder unsubstituierten aromatischen Äthern und Iminen im Molverhältnis 1:5 bis 5:1 mit Formaldehyd im Molverhältnis 1:0,8 bis 1:2 bezogen auf die im Überschuß vorhandene Komponente eingesetzt werden.

**5.** Verwendung der mineralischen Baustoffe gemäß Anspruch 1 bis 4 zur Herstellung von Bauteilen, wie Estrichen, Wandplatten, Mauern, Decken usw.

Europäisches Patentamt

# EUROPÄISCHER RECHERCHENBERICHT

Nummer der Anmeldung

EP 93 10 8263

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2 421 222 (CASSELLA FARBWERKE MAINKUR AG)<br>* Seite 4, Absatz 1 - Seite 5, Absatz 1 *<br>* Seite 6, Absatz 3 *<br>--- | 1-5 | C04B24/22 |
| A | DATABASE WPI<br>Week 8030,<br>Derwent Publications Ltd., London, GB;<br>AN 80-52844C<br>& SU-A-701 973 (TRANSPORT CONS. RES.) 8. Dezember 1979<br>* Zusammenfassung *<br>--- | 1-5 | |
| D,A | FR-A-2 228 041 (BAYER AG)<br>--- | 1-5 | |
| A | DE-A-4 027 667 (SANYO-KOKUSAKU PULP CO.)<br>* Seite 8, Zeile 48 - Zeile 58; Ansprüche 1,14-21 *<br>----- | 1-5 | |
| | | | **RECHERCHIERTE SACHGEBIETE (Int. Cl.5 )** |
| | | | C04B |

Der vorliegende Recherchenbericht wurde für alle Patentansprüche erstellt

| Recherchenort | Abschlußdatum der Recherche | Prüfer |
|---|---|---|
| DEN HAAG | 22 SEPTEMBER 1993 | THEODORIDOU E. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)